# EUROPÄISCHE PATENTSCHRIFT

(11) **EP 1 618 998 B1**
(45) Veröffentlichungstag und Bekanntmachung des Hinweises auf die Patenterteilung: **10.12.2008**
(21) Anmeldenummer: 05015168.7
(22) Anmeldetag: 13.07.2005
(51) Int. Cl.: B25C 5/08, B25C 5/06, B25C 5/11, F24D 3/14

(54) **Setzgerät für Rohrhalter zum Befestigen von Installationsrohren auf einer nachgiebigen Unterlage**
Applicator with u-shaped clips to be used for joining pipes to a flexible base
Dispositif de positionnement pour la fixation de tuyaux d'installation sur une base flexible

(30) Priorität: 21.07.2004 DE 202004011405 U
(43) Veröffentlichungstag der Anmeldung: 25.01.2006
(73) Patentinhaber: Schütz GmbH & Co. KGaA, 56242 Selters (DE)
(72) Erfinder: Schütz, Udo, 56242 Selters (DE)
(74) Vertreter: Pürckhauer, Rolf

(56) Entgegenhaltungen:
- EP-A- 1 331 067
- DE-A1- 3 129 818

## Beschreibung

Beim Einbau von Fußbodenheizungen ist es wichtig, daß die Heizrohre aus Kunststoff vollkommen in dem auf einer Wärmedämmung aufgebrachten Bodenestrich eingebettet sind. Das Umschließen der Heizrohre mit Estrich gewährleistet, daß der beim Durchströmen des Heizwassers entstehende Druck auf die Rohrinnenwand von dem Estrich überall gleichmäßig aufgenommen wird, um eine Rißbildung in der Rohrwand während eines langjährigen Betriebs einer Fußbodenheizung auszuschließen. Außerdem wird durch die vollkommene Einbettung der Heizrohre im Estrich die Wärme schnell und vollständig auf den Estrich übertragen, so daß an der Fußbodenoberfläche eine gleichmäßige Temperatur herrscht und sich nicht über den Heizrohren wärmere Zonen ausbilden. In wirtschaftlicher Hinsicht ist eine kostengünstige Befestigungsmethode der Heizrohre bedeutsam, die eine schnelle und einfache Verlegung der Heizrohre ermöglicht.

Zum Befestigen der Heizrohre auf einer nachgiebigen Wärmedämmung werden spritzgegossene Rohrhalter aus Kunststoff verwendet, die U-förmig mit einem das Heizrohr überfassenden Bügel und zwei an den Bügel anschließenden Schenkeln ausgebildet sind, die Widerhaken zur Verankerung in der Wärmedämmung aufweisen.

Als Wärme- und Trittschalldämmungsunterlage für die Fußbodenheizrohre werden vorwiegend Dämmplatten aus Schaumkunststoff in zwei Ausführungsformen verwendet. Die eine Platte besteht aus einer Unterschicht aus einem geschäumten Kunststoff und einer Deckschicht, die durch eine Kunststoffolie, eine durch ein Kunststoffgewebe verstärkte Folie oder ein reines Kunststoffgewebe gebildet wird. Die andere als Sandwichplatte ausgebildete Dämmplatte wird durch eine Unterschicht aus einem geschäumten, weicheren Kunststoff, eine Oberschicht aus einem geschäumten, harten Kunststoff und eine Deckschicht aus Folienmaterial, einem durch ein Kunststoffgewebe verstärkten Folienmaterial oder einem reinen Kunststoffgewebe gebildet.

Die Rohrhalter werden üblicherweise mit einem Setzgerät, das auf das zu verlegende Heizrohr aufgesetzt wird, in die Dämmschicht eingestoßen. Nach dem Fixieren der Heizrohre auf der Dämmschicht wird eine Estrichschicht aufgebracht, in die die Heizrohre eingebettet werden.

Die Erfindung betrifft ein Setzgerät mit den Merkmalen des Oberbegriffs des Patentanspruchs 1.

Bei einem aus der DE 31 29 818 C3 bekannten Setzgerät der gattungsgemäßen Art wird zur Verhinderung eines ungewollten Herausrutschens eines Rohrhalters aus dem Gehäuse des Setzgerätes durch den Ausstoßkanal desselben eine Kugelraste mit einer in einer Gewindehülse mit Außengewinde eingesetzten Kugel verwendet, die durch eine Druckfeder beaufschlagt ist, wobei die Gewindehülse in eine entsprechende Gewindebohrung des Gehäuses des Setzgerätes eingeschraubt ist. Die Kugelraste schiebt sich unter den Bügel des jeweils aus dem Haltermagazin in den Ausstoßkanal des Setzgerätgehäuses nachrutschenden Rohrhalters und verhindert somit das Herausrutschen des Rohrhalters aus dem Setzgerät. Beim Eindrücken eines Rohrhalters über ein Heizrohr in die Wärmedämmschicht wird die Kugelraste unter Einwirkung der Druckkraft des handbetätigten Schiebers seitlich weggedrückt und auf diese Weise der jeweils in die Dämmschicht einzudrückende Rohrhalter freigegeben.

Die Nachteile dieses bekannten Setzgerätes sind darin zu sehen, daß die Kugelraste eingestellt und aufgrund von Verschleißerscheinungen regelmäßig ausgetauscht werden muß.

Der Erfindung liegt die Aufgabe zugrunde, das gattungsgemäße Setzgerät im Hinblick auf eine optimale Funktionstüchtigkeit und eine weitgehende Wartungsfreiheit weiterzuentwickeln.

Diese Aufgabe wird erfindungsgemäß gelöst durch ein Setzgerät mit den Merkmalen des Patentanspruchs 1.

Die Unteransprüche beinhalten vorteilhafte und zweckmäßige Weiterbildungen der Erfindung.

Das neue Setzgerät ist nachstehend anhand von Zeichnungsfiguren erläutert, die folgendes darstellen:

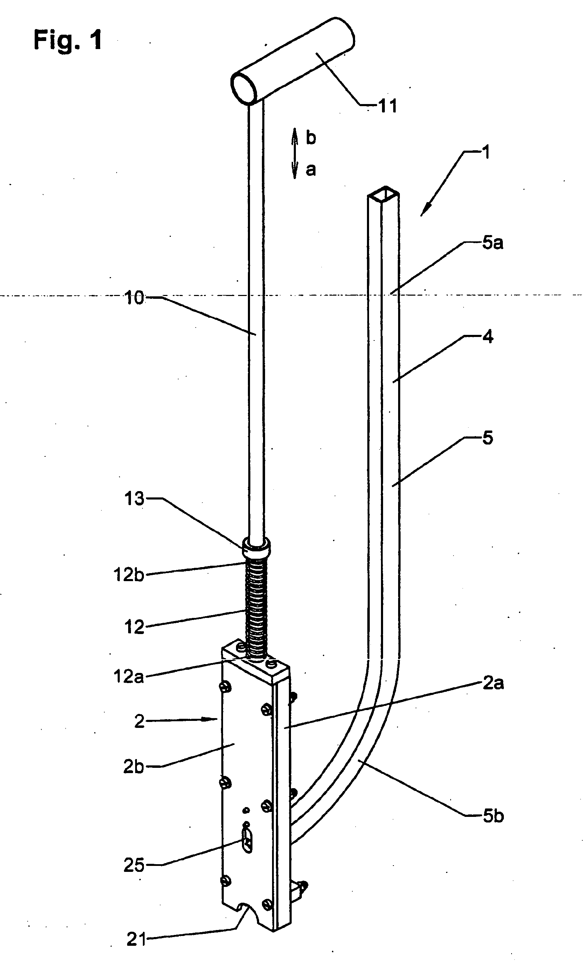

- Fig.1: eine perspektivische Darstellung des Setzgerätes,
- Fig. 2: einen Längsschnitt des Setzgerätes mit der Ausgangsstellung des Schiebers in vergrößerter Darstellung,
- Fig. 3: einen Längsschnitt des Setzgerätes mit der unteren Endstellung des Schiebers in vergrößerter Darstellung und

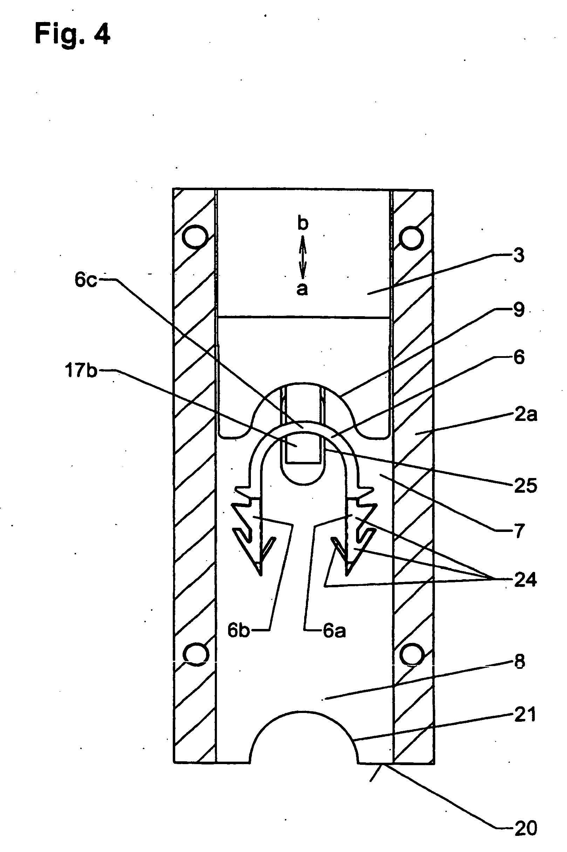

- Fig. 4: einen Schnitt nach Linie IV-IV der Fig. 2.

Hauptbauteile des Setzgerätes 1 sind ein flaches, längliches Gehäuse 2, ein in diesem geführter, manuell betätigter Schieber 3 sowie ein an dem Gehäuse 2 angebrachtes Magazin 4 mit einer Haltestange 5 zum Aufstecken von Rohrhaltern 6.

Das Gehäuse 2, das aus zwei miteinander verschraubten Gehäuseteilen 2a, 2b besteht, bildet einen rechteckigen Ausstoßkanal 7 mit einer Ausstoßöffnung 8, in dem der Schieber 3, der an seinem vorderen Ende eine Aufnahmeöffnung 9 für einen U-förmigen Rohrhalter 6 aufweist, verschiebbar ist.

Die Haltestange 5 des Rohrhaltermagazins 4 ist parallel zu einer an dem Schieber 3 befestigten Betätigungsstange 10 ausgerichtet, an deren oberem Ende ein zylindrischer Handgriff 11 angebracht ist, der zur Betätigungsstange 10 unsymmetrisch ausgebildet und quer zur Bewegungsrichtung a, b des Schiebers gerichtet ist. Der längere Teil des Handgriffs 11 ragt in Richtung des Magazins 4, dessen Höhe so bemessen ist, daß zwischen Griff 11 und oberem Ende des Magazins 4 ein genügend großer Freiraum verbleibt, um den Handgriff bequem fassen zu können.

Die Betätigungsstange 10 des Schiebers 3 stützt sich über eine als Druckfeder ausgebildete, auf die Betätigungsstange aufgeschobene Rückstellfeder 12 an dem Gehäuse 2 des Setzgerätes 1 ab, wobei das untere Ende 12a der Rückstellfeder 12 am Gehäuse 2 und das obere Ende 12b der Feder an einem auf der Betätigungsstange 10 befestigten Anschlag 13 anliegt.

Die Haltestange 5 des Magazins 4 weist einen oberen geraden Stangenabschnitt 5a und einen unteren kreisbogenförmigen Abschnitt 5b mit einem Abgabeende 14 auf. Die Haltestange 5 des Magazins 4 ist mit einer am Abgabeende 14 angebrachten Halteplatte 15 am Gehäuse 2 des Setzgerätes 1 befestigt.

Das untere Abgabeende 14 der Haltestange 5 des Magazins 4 mündet in eine seitliche Öffnung 16 des Ausstoßkanals 7 des Gehäuses 2 des Setzgerätes 1.

In das Gehäuse 2 ist ein federnd ausgebildetes, streifenförmiges Halteelement 17 eingebaut, das mit dem einen Ende 17a an der Innenwand 18 des Gehäuses 2 befestigt ist und dessen anderes freies Ende 17b als runder Haken ausgebildet ist, der mit seiner Wölbung 19 in den Ausstoßkanal 7 hineinragt, der seitlichen Eintrittsöffnung 16 des Ausstoßkanals 7 gegenüberliegt und die nacheinander von der Haltestange 5 des Magazins 4 durch die Eintrittsöffnung 16 in den Ausstoßkanal 7 rutschenden Rohrhalter 6 festhält.

Die untere Aufstandsfläche 20 des Gehäuses 2 des Setzgerätes 1 besitzt im Bereich der Ausstoßöffnung 8 des Ausstoßkanals 7 eine Führungsvertiefung 21 für ein auf Wärmedämmplatten 22 zu verlegendes Heizrohr 23 einer Fußbodenheizung.

Mit dem Setzgerät wird wie folgt gearbeitet:

Bei der Füllung des Magazins 4 werden die spritzgegossenen, U-förmigen Rohrhalter 6 aus Kunststoff, die durch zwei gerade Schenkel 6a, 6b mit Widerhaken 24 und einen gebogenen Verbindungsschenkel 6c gebildet werden, von oben auf die Haltestange 5 aufgedrückt. Dabei weiten sich die Rohrhalter 6 ein wenig auf und deren Widerhaken 24 hintergreifen die Haltestange 5, so daß die Rohrhalter sicher auf der Haltestange gehalten sind. Um die Bestückung des Magazins 4 mit Rohrhaltern 6 schnell vornehmen zu können, können die Rohrhalter aufeinander ausgerichtet durch ein Klebeband verbunden werden, so daß Streifen aus Rohrhaltern gleichzeitig auf die Haltestange des Magazins aufgeschoben werden können.

Nach der Bestückung des Magazins mit Rohrhaltern kann das Klebeband entfernt werden. Es besteht ferner die Möglichkeit, längere Bänder aus Rohrhaltern herzustellen, wobei die einzelnen Rohrhalter durch Stege miteinander verbunden sind, die beim Herausdrücken der Halter mit dem Schieber aus dem Gehäuse des Setzgerätes durchgetrennt werden.

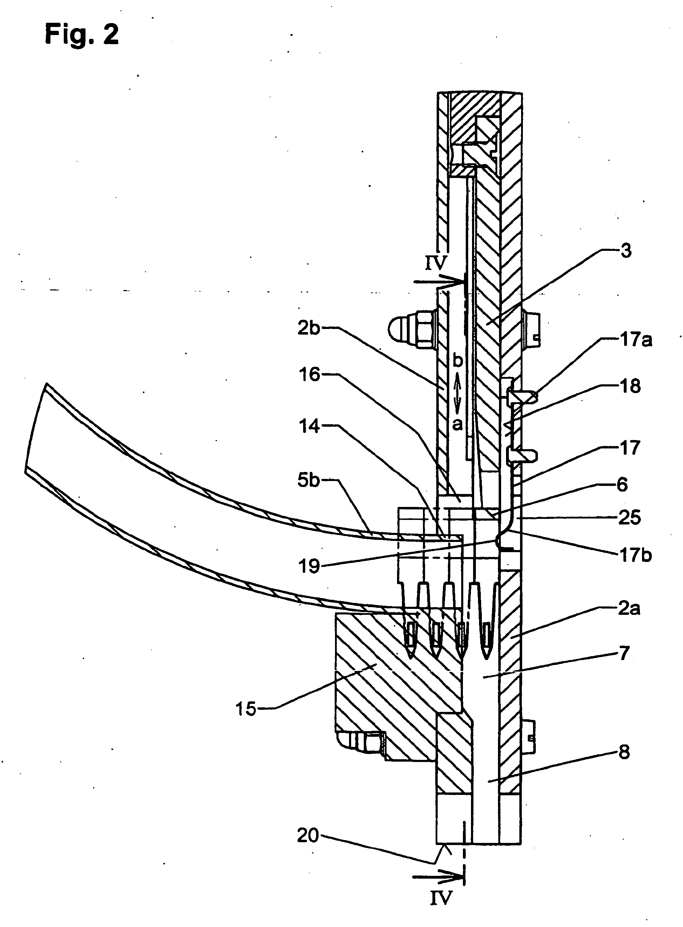

In der angehobenen oberen Stellung des Schiebers 3 gemäß Fig. 2 rutscht der vorderste Halter 6 vom Abgabeende 14 der Haltestange 5 des Magazins 4 unter Schwerkrafteinwirkung durch die seitliche Eintrittsöffnung 16 in den Ausstoßkanàl 7 des Setzgerätes 1 auf das hakenförmige Ende 17b des Halteelementes 17 und wird durch dieses am ungewollten Herausrutschen durch den Ausstoßkanal 7 aus dem Gehäuse 2 des Setzgerätes 1 gehindert.

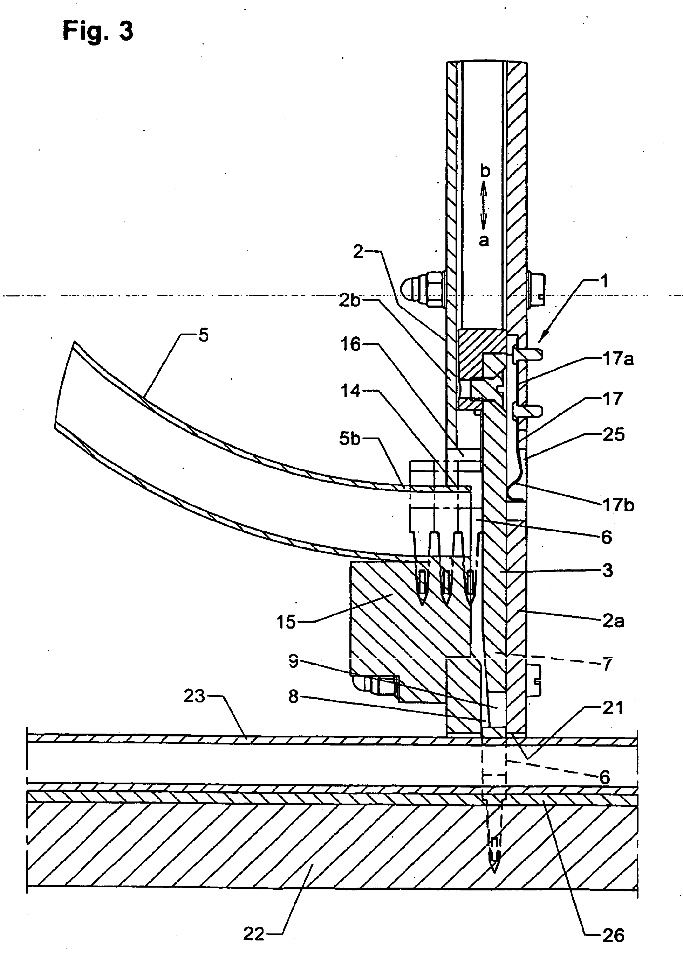

Wenn der Schieber 3 in seiner abgesenkten unteren Position gemäß Fig. 3 steht, kann der auf dem Abgabeende 14 der Haltestange 5 sitzende vordere Rohrhalter 6 nur bis an die Seitenfläche des Schiebers rutschen und kann somit nicht aus dem Gehäuse 2 des Setzgerätes 1 herausfallen.

Zum Befestigen eines Heizrohres 23 auf einer Dämmplatte 22 wird das Gehäuse 2 des Setzgerätes 1 mit der unteren Aufstandsfläche 20 derart auf die Dämmplatte aufgesetzt, daß das Heizrohr 23 in der Führungsvertiefung 21 des Gehäuses 2 gehalten ist. Wenn das Setzgerät 1 an der gewünschten Befestigungsstelle angesetzt ist, wird der Schieber 3 mittels des Handgriffs 11 entgegen der Federkraft der Rückstellfeder 12 in Pfeilrichtung a nach unten gedrückt. Beim Herunterdrücken des Schiebers 3 wird das hakenförmige, federnde Ende 17b des Halteelements 17 durch den Rohrhalter 6, der in der Aufnahmeöffnung 9 des Schiebers 3 gehalten und damit gegen seitliches Abkippen gesichert ist, unter Einwirkung der Schieberkraft quer zur Bewegungsrichtung a des Schiebers 3 nach außen in eine in dem Gehäuse 2 angeordnete Aufnahmeöffnung 25 gedrückt, so daß der Rohrhalter 6 freigegeben wird. Der Rohrhalter 6 wird durch den Ausstoßkanal 7 und die Ausstoßöffnung 8 auf das Heizrohr 23 aufgeschoben und die Schenkel 6a, 6b des Rohrhalters 6 werden in die als Auflage für das Heizrohr 23 dienende Dämmplatte 22 eingedrückt, wobei die Widerhaken 24 des Rohrhalters 6 mit der Deckschicht 26 der Dämmplatte 22 verhaken und dadurch der Rohrhalter gegen Herausziehen aus der Dämmplatte gesichert ist. Nach Entlasten des Handgriffs 11 wird der Schieber 3 durch die Federkraft der Rückstellfeder 12 in Pfeilrichtung b in die obere Ausgangsposition gemäß Fig. 2 angehoben, wobei das hakenförmige Ende 17b des Halteelements 17 in den Ausstoßkanal 7 des Gehäuses 2 des Setzgerätes 1 zurückfedert und dadurch der auf dem Abgabeende 14 der Haltestange 5 des Magazins 4 sitzende Rohrhalter 6 zurückgehalten wird und damit nicht aus dem Setzgerät 1 herausrutschen kann.

Nach dem Eindrücken eines Rohrhalters 6 wird das Setzgerät 1 mit dem Handgriff 11 angehoben und zur nächsten Befestigungsstelle geführt.

## Patentansprüche

1. Setzgerät (1) für Rohrhalter (6) zum Befestigen von Installationsrohren auf einer nachgiebigen Unterlage, insbesondere von Fußbodenheizrohren (23) auf Wärmedämmplatten (22), mit einem geteilten Gehäuse (2), einem in diesem geführten, manuell oder motorisch betätigten Schieber (3) mit einem Eindrückende, das eine Aufnahmeöffnung (9) für die anzubringenden Rohrhalter (6) aufweist und in einem Ausstoßkanal (7) mit einer Ausstoßöffnung (8) im Gehäuse (2) des Setzgerätes (1) verschiebbar ist, einem an dem Gehäuse (2) des Setzgerätes (1) angebrachten Magazin (4) mit einer Haltestange (5) für die Rohrhalter (6), wobei das untere Abgabeende (14) der stehend angeordneten Haltestange (5) in eine seitliche Öffnung (16) des Ausstoßkanals (7) mündet, einem in dem Gehäuse (2) des Setzgerätes (1) befestigten Rastelement, das an den unter Schwerkrafteinwirkung über die Haltestange (5) des Magazins (4) nacheinander in den Ausstoßkanal (7) rutschenden Rohrhaltern (6) angreift und diese am ungewollten Herausrutschen durch den Ausstoßkanal (7) aus dem Gehäuse (2) des Setzgerätes (1) hindert und das beim Betätigen des Schiebers (3) zum Aufschieben eines Halters (6) auf ein zu befestigendes Rohr (23) und Eindrücken des Halters (6) in die Unterlage des Rohres (23) unter Einwirkung der Schieberkraft zurückfedert und den Rohrhalter (6) freigibt und bei der Rückstellbewegung des Schiebers (3) in den Ausstoßkanal (7) des Setzgerätes (1) zurückfedert, sowie einer in der unteren Aufstandsfläche (20) des Gehäuses (2) des Setzgerätes (1) im Bereich der Ausstoßöffnung (8) des Ausstoßkanals (7) ausgebildeten Führungsvertiefung (21) für das zu befestigende Rohr (23), **dadurch gekennzeichnet, dass** das Rastelement zur Sicherung der Rohrhalter (6) gegen Herausrutschen derselben aus dem Ausstoßkanal (7) des Setzgerätes (1) vor Betätigung des Schiebers (3) zum Eindrücken eines Rohrhalters (6) in die Unterlage (Dämmplatte 22) des zu befestigenden Heizrohres (23) als federndes, streifenförmiges Halteelement (17) ausgebildet ist, das mit dem einen Ende (17a) an der Innenwand (18) des Gehäuses (2) des Setzgerätes (1) befestigt ist und dessen anderes Ende (17b) in den Ausstoßkanal (7) hineinragt, der seitlichen Eintrittsöffnung (16) des Ausstoßkanals (7) für die Rohrhalter (6) gegenüberliegt und die nacheinander in den Ausstoßkanal (7) rutschenden Rohrhalter (6) festhält.

2. Setzgerät nach Anspruch 1, **dadurch gekennzeichnet, dass** das freie Ende (17b) des Halteelements (17) als runder oder eckiger Haken ausgebildet ist, dessen Wölbung (19) in den Ausstoßkanal (7) hineinragt.

3. Setzgerät nach Anspruch 1 und 2, **gekennzeichnet durch** eine in dem Gehäuse (2) desselben angeordnete Öffnung (25) zur Aufnahme des beim Befestigen eines Rohrhalters (6) quer zur Bewegungsrichtung (a) des Schiebers (3) ausfedernden freien Endes (17b) des Halteelements (17).

## Claims

1. Fixing apparatus (1) for pipe holders (6) for mounting installation pipes on a flexible foundation, in particular floor heating pipes (23) on heat insulating sheets (22), having a divided housing (2), a slide (3) which is guided in the latter and is manually or motor-actuated with a penetration end which has a receiving opening (9) for the pipe holders (6) to be mounted and is displaceable in an ejection channel (7) with an ejection opening (8) in the housing (2) of the fixing apparatus (1), having a magazine (4), which is mounted on the housing (2) of the fixing apparatus, with a retaining rod (5) for the pipe holders (6), the lower delivery end (14) of the retaining rod (5) which is disposed vertically leading into a lateral opening (16) of the ejection channel (7), having a catching element which is mounted in the housing (2) of the fixing apparatus (1), which catching element engages on the pipe holders (6) which slide in succession under the effect of gravity over the retaining rod (5) of the magazine (4) into the ejection channel (7) and prevents said pipe holders from slipping in an undesired manner through the ejection channel (7) out of the housing (2) of the fixing apparatus (1) and which catching element, during actuation of the slide (3), in order to push a holder (6) onto a pipe (23) to be mounted and to press the holder (6) into the foundation of the pipe (23) under the effect of the slide force, springs back and releases the pipe holder (6) and, during the restoring movement of the slide (3), springs back into the ejection channel (7) of the fixing apparatus (1), and also having a guide recess (21), which is configured in the lower contact surface (20) of the housing (2) of the fixing apparatus (1) in the region of the ejection opening (8) of the ejection channel (7), for the pipe (23) to be mounted, **characterised in that** the catching element for securing the pipe holders (6) against slippage of the same out of the ejection channel (7) of the fixing apparatus (1) before actuation of the slide (3) for pushing a pipe holder (6) into the foundation (insulating sheet 22) of the heating pipe (23) to be mounted is configured as a resilient, strip-shaped retaining element (17) which is mounted with the one end (17a) on the inner wall (18) of the housing (2) of the fixing apparatus (1), and the other end of which (17b) projects into the ejection channel (7), is situated opposite the lateral entry opening (16) of the ejection channel (7) for the pipe holders (6) and retains the pipe holders (6) which slide in succession into the ejection channel (7).

2. Fixing apparatus according to claim 1, **characterised in that** the free end (17b) of the retaining element (17) is configured as a round or square hook, the curvature (19) of which projects into the ejection channel (7).

3. Fixing apparatus according to claim 1 and 2, **characterised by** an opening (25) which is disposed in the housing (2) of the same, for receiving the free end (17b) of the retaining element (17), which free end springs out during mounting of a pipe holder (6) transversely relative to the direction of movement (a) of the slide (3).

## Revendications

1. Appareil (1) de pose d'agrafes (6) pour la fixation de tubes d'installation sur un support souple, notamment de tubes (23) de chauffage par le sol sur des dalles (22) calorifuges, comprenant un boîtier (2) fendu, un coulisseau (3) qui y est guidé, qui est actionné manuellement ou par moteur et qui a une extrémité d'enfoncement, qui a une ouverture (8) de réception des agrafes (6) à mettre et qui peut coulisser dans un canal (7) d'expulsion ayant une ouverture (8) d'expulsion dans le boîtier (2) de l'appareil (1) de pose, un magasin (4) mis sur le boîtier (2) de l'appareil de pose et ayant une barre (5) de maintien des agrafes (6), l'extrémité (14) inférieure de sortie de la barre (5) de maintien disposée verticalement débouchant dans une ouverture (16) latérale du canal (7) d'expulsion, un élément d'encliquetage, qui est fixé dans le boîtier (2) de l'appareil (1) de pose, qui attaque les agrafes (6) glissant les unes après les autres dans le canal (7) d'expulsion sous l'effet de la force de gravité sur la barre (5) de maintien du magasin (4) et qui empêche ces agrafes de sortir intempestivement du boîtier (2) de l'appareil (1) de pose par le canal (7) d'expulsion et qui, lorsque le coulisseau (3) est actionné pour le coulissement d'une agrafe (6) sur un tube (23) à fixer et pour l'enfoncement de l'agrafe (6) dans le support du tube (23), revient élastiquement sous l'effet de la force du coulisseau et dégage l'agrafe (6) et, lors du mouvement de rappel du coulisseau, (3) revient élastiquement dans le canal (7) d'expulsion de l'appareil (1) de pose ainsi qu'une cavité (21) de guidage du tube (23) à fixer, cavité qui est formée dans la surface (20) inférieure d'assise du boîtier (2) de l'appareil (1) de pose, dans la région de l'ouverture (8) d'expulsion du canal (7) d'expulsion, **caractérisé en ce que** l'élément d'encliquetage est, pour empêcher les agrafes (6) de glisser hors du canal (7) d'expulsion de l'appareil (1) de pose avant l'actionnement du coulisseau (3) pour enfoncer une agrafe (6) dans le support (dalle (22) calorifuge) du tube (23) de chauffage à fixer, constitué sous la forme d'un élément (17) de maintien élastique, en forme de bande, qui est fixé par l'une des extrémité (17a) à la paroi (18) intérieure du boîtier (2) de l'appareil (1) de pose et dont l'autre extrémité (17b) pénètre dans le canal (7) d'expulsion, est opposée à l'ouverture (16) d'entrée latérale du canal (7) d'expulsion des agrafes (6) et maintient les agrafes (6) glissant l'une après l'autre dans le canal (7) d'expulsion.

2. Appareil de pose suivant la revendication 1, **caractérisé en ce que** l'extrémité (17b) libre de l'élément (17) de maintien est constituée sous la forme d'un crochet rond ou cunéiforme, dont la partie (19) bombée pénètre dans le canal (7) d'expulsion.

3. Appareil de pose suivant la revendication 1 et 2, **caractérisé par** une ouverture (25) ménagée dans son boîtier (2) pour la réception de l'extrémité (17b) libre de l'élément (17) de maintien cédant élastiquement, lors de la fixation d'un porte-tube (6), transversalement à la direction (a) de déplacement du coulisseau (3).
